# FASCICULE DE BREVET EUROPEEN

(11) **EP 0 508 865 B1**
(45) Date de publication et mention de la délivrance du brevet: **08.03.1995**
(21) Numéro de dépôt: 92400937.6
(22) Date de dépôt: 03.04.1992
(51) Int. Cl.: F16D 65/12

(54) **Disque de frein formant moyeu tournant**
Eine Radnabe bildende Scheibenbremse
A wheel hub forming disc brake

(30) Priorité: 09.04.1991 FR 9104279
(43) Date de publication de la demande: 14.10.1992
(73) Titulaire: RENAULT VEHICULES INDUSTRIELS, 69003 Lyon (FR)
(72) Inventeur: Bargin, Pierre, F-69008 Lyon (FR); Berthaud, Jean, F-38790 Saint Georges d'Esperanche (FR)
(74) Mandataire: Ernst-Schonberg, Michel

(56) Documents cités:
- EP-A- 0 049 527
- DE-B- 2 013 535
- FR-A- 2 440 494
- FR-A- 2 500 553
- FR-A- 2 662 771

## Description

L'invention concerne un disque de frein formant moyeu tournant support d'une roue à freiner conforme au préambule de la revendication.

L'invention concerne plus particulièrement un disque de frein constitué par une couronne formée par deux plateaux de frottement reliés entre eux par des ailettes de ventilation et qui se prolonge axialement par un moyeu centré sur l'axe de rotation du disque.

La publication FR-A-2.440.494 décrit un disque de frein réalisé à partir d'une armature tissée tridimensionnelle imprégnée de carbone.

La publication FR-A-2.500.553 décrit un disque de frein moulé d'une seule pièce dont le moyeu se prolonge axialement par une bride de fixation de la roue à freiner. Dans le but de supprimer les conséquences de la dilatation thermique du disque qui se traduit par des phénomènes de voilage du disque et par des déformations dans la jonction du moyeu avec le disque il a été proposé de réduire la rigidité de l'ensemble disque-moyeu dans la zone de jonction de sorte que des mouvements compensatoires du disque restent possible. Il en résulte que les voilages, déformations et tensions résultantes sont éliminés.

Cependant, lorsque le moyeu du disque est soumis aux efforts de charge et aux efforts engendrés par les efforts dynamiques exercés sur la roue, la zone de jonction entre le disque et le moyeu est soumise à des contraintes mécaniques de flexion et de cisaillement qui ne peuvent être absorbés par les liaisons existantes.

L'invention a pour objet un disque de frein prolongé par un moyeu de roue tournant qui supporte la roue à freiner et assure une meilleure transmission du couple de freinage exercé par le disque sur la roue.

L'invention a également pour objet un disque de frein prolongé par un moyeu qui permet de réduire notablement les risques de rupture de la jonction entre le disque et le moyeu en cours de fonctionnement.

Ces objectifs sont satisfaits conformément à la caractéristique de la revendication.

Selon une autre caractéristique du disque de frein, la partie moyeu de celui-ci contient un réseau filaire.

Suivant un mode de réalisation préférentiel, le réseau filaire est constitué par un enroulement évasé de spires non jointives respectivement espacées par des barreaux filaires.

Le moyeu ainsi réalisé permet le centrage et la fixation de la roue à freiner.

D'autres caractéristiques et avantages de l'invention apparaîtront à la lecture de la description d'un mode de réalisation du disque en référence aux dessins annexés dans lesquels :
- la figure 1 est une vue en perspective du disque avec arrachement partiel,

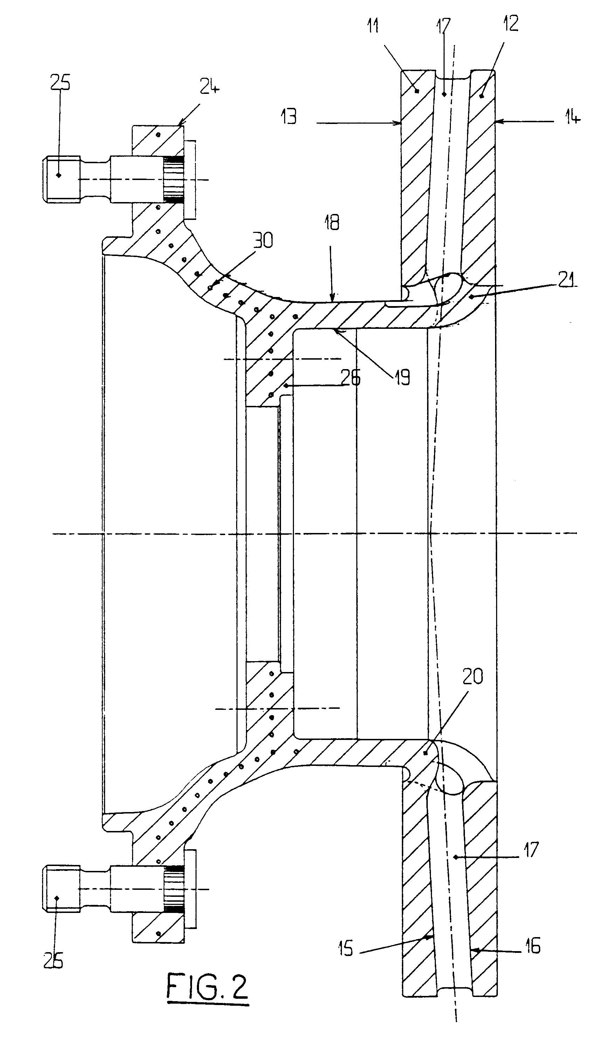

- la figure 2 est une vue en coupe axiale de l'ensemble constitué par le disque et son moyeu.

Suivant l'exemple d'exécution représenté, le disque 10 de frein est constitué par deux couronnes annulaires coaxiales 11, 12 espacées l'une de l'autre, qui présentent des faces avant planes 13 et 14 constituant respectivement les pistes de freinage des garnitures de friction portées par l'étrier non représenté du frein et des faces arrière 15, 16 en regard reliées entre elles par des entretoises en forme d'ailettes 17. Une pluralité d'ailettes 17, réparties à intervalles angulaires égaux sur la périphérie du disque, définissent entre elles des canaux de ventilation.

L'ensemble des couronnes 11, 12 est déporté axialement par rapport à l'alésage 19 d'un moyeu 18 et se raccordent alternativement audit moyeu par des pattes de liaison 20,21.

Un exemple de réalisation d'un tel disque est décrit dans la publication FR-A-2.662.771.

Le moyeu 18 se prolonge axialement par une bride 24 portant les goujons de roue 25. Une cloison 26 de montage d'un roulement limite axialement l'alésage 19 de réception dudit roulement de roue non représenté, monté sur la fusée de roue. L'une des bagues du roulement de roue est à cet effet, prolongée radialement par une bride de fixation percée de trous de passage des vis de fixation dont les têtes prennent appui sur la cloison 26 dans le but d'assurer une retenue axiale du roulement dans l'alésage 19.

Selon l'invention une armature métallique 30 noyée dans le corps de la cloison 26 du moyeu et de la bride 24 s'étend axialement et radialement à partir de la cloison 26 en direction de la périphérie de la bride 24.

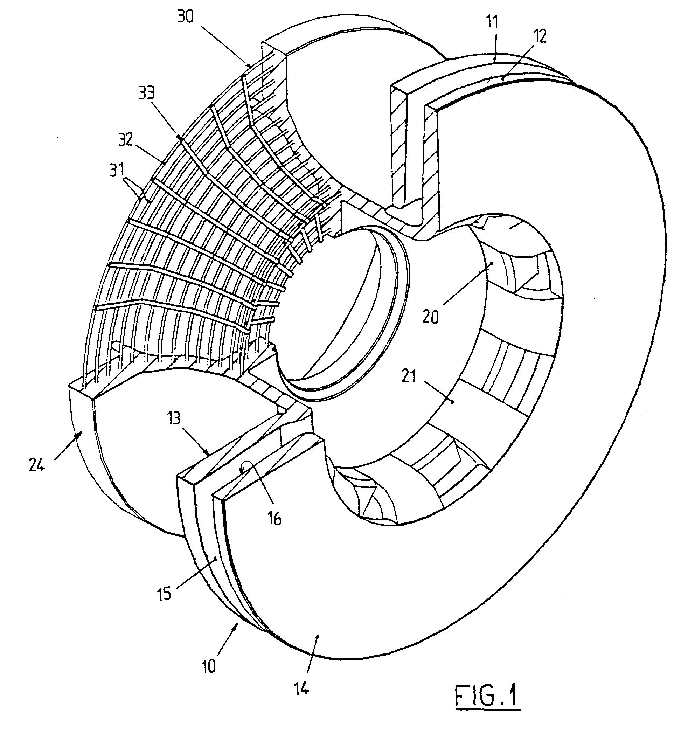

A cet effet, l'armature 30 affecte une forme générale évasée constituée par un réseau de fils 31 obtenu par un enroulement de spires 32 régulièrement espacées par des fils 33 ainsi que cela est représenté à la figure 1.

## Revendications

1. Disque de frein formant moyeu support d'une roue à freiner, constitué par deux couronnes annulaires coaxiales (11, 12) dont les faces arrières (15; 16) sont entretoisées par des ailettes (17) de ventilation et dans lequel le moyeu (18) du disque (10) se prolonge axialement par une bride (24) de fixation de la roue dans laquelle est noyée une armature métallique (30) constituée par un réseau de fils (31), caractérisé par le fait que le réseau de fils est constitué par un enroulement de forme évasée à spires (32) régulièrement espacées par des barreaux de fils (33).

2. Disque de frein selon la revendication 1, caractérisé par le fait que l'armature métallique (30) s'étend axialement et radialement à partir d'une cloison (26) de montage d'un roulement en direction de la périphérie de la bride (24) de fixation de la roue.

## Claims

1. A brake disc forming a hub supporting a wheel to be braked, formed by two coaxial annular crowns (11, 12) whose rear surfaces (15, 16) are braced by ventilation blades (17) and in which the hub (18) of the disc (10) is extended axially by a flange (24) for fastening the wheel in which there is embedded a metal armature (30) formed by a system of wires (31), characterised in that the system of wires is formed by a winding of flared shape with turns (32) regularly spaced by wire bars (33).

2. A brake disc as claimed in claim 1, characterised in that the metal armature (30) extends axially and radially from a partition (26) for the assembly of a roller bearing in the direction of the periphery of the wheel fastening flange (24).

## Patentansprüche

1. Eine Radnabe bildende Bremsscheibe, welche ein abzubremsendes Rad trägt, bestehend aus zwei koaxialen ringförmigen Kränzen (11, 12), deren Innenwände (15, 16) durch Lüftungsstege (17) überbrückt sind und wobei die Nabe (18) der Scheibe (10) in axialer Richtung durch einen Befestigungsflansch (24) für das Rad verlängert ist, in den eine metallische Armierung eingesetzt ist, die aus einem Drahtraster (21) besteht, dadurch gekennzeichnet, daß das Drahtraster aus einer korbförmig aufgeweiteten Wicklung besteht, deren einzelne Windungen (32) aufgrund von Drahtstäben (33) einen regelmäßigen Abstand voneinander aufweisen.

2. Bremsscheibe nach Anspruch 1, dadurch gekennzeichnet, daß die metallische Armierung (30) sich axial und radial ausgehend von einer Montagewand (26) eines Lagers aus erstreckt in Richtung zum Umfang des Befestigungsflansches (24) des Rades hin.
